# EUROPÄISCHE PATENTSCHRIFT

(11) **EP 2 415 548 B1**
(45) Veröffentlichungstag und Bekanntmachung des Hinweises auf die Patenterteilung: **24.04.2013**
(21) Anmeldenummer: 10171650.4
(22) Anmeldetag: 02.08.2010
(51) Int. Cl.: B23K 9/12, B23K 9/133

(54) **Diagnosegerät für Schweißgeräte**
Diagnosis device for welding devices
Appareil de diagnostic pour appareils de soudure

(43) Veröffentlichungstag der Anmeldung: 08.02.2012
(73) Patentinhaber: Dinse G.m.b.H., 22419 Hamburg (DE)
(72) Erfinder: Petersen, Sven, 23866 Nahe (DE); Lawin, Oliver, 25524 Itzehoe (DE)
(74) Vertreter: Raffay & Fleck

(56) Entgegenhaltungen:
- WO-A1-00/64620
- US-A1- 2006 138 116

## Beschreibung

Die vorliegende Erfindung betrifft ein Diagnosegerät und ein Diagnoseverfahren für Schweißdrahtzuführungsvorrichtungen.

Schweißdrahtzuführungsvorrichtungen werden in Schweißsystemen eingesetzt, um den Schweißdraht zum Ort, an dem geschweißt wird, zu führen. Sie werden dabei häufig auch dazu verwendet, weitere Arbeitsmedien, wie Kühlwasser oder Schutzgas, zuzuführen.

Solche Schweißdrahtzuführungsvorrichtungen weisen insbesondere bei Laserschweißsystemen eine lange Garnitur auf.

Eine solche Garnitur ist im Prinzip ein langes Rohr bzw. ein langer Schlauch, in dem der Schweißdraht geführt wird und auch Zuführkanäle für weitere Arbeitsmedien vorgesehen sein können und in dem ggf. elektrische Leitungen verlegt sind, um elektrische Elemente am Ende der Garnitur mit Betriebsspannung zu versorgen beziehungsweise mit einer Ansteuerungsvorrichtung zu verbinden. Dabei ist an einem ersten Ende der Garnitur in der Regel ein Schweißdrahtaustritt angeordnet. Zwischen dem Schweißdrahtaustritt und der Garnitur befinden sich in der Regel weitere Elemente, wie eine Sensoreinheit oder eine Antriebsvorrichtung zum Vorschieben bzw. Bewegen des Schweißdrahtes. Am anderen, zweiten Ende der Garnitur befindet sich eine Zuführung für den Schweißdraht und ggf. Zuführungen für weitere Arbeitsmedian sowie elektrische Verbindungen, insbesondere Anschlüsse zur Ansteuerungsvorrichtung. Darüber hinaus kann am zweiten Ende der Garnitur beispielsweise eine weitere Antriebsvorrichtung zum Bewegen des Schweißdrahtes vorgesehen sein. Der Schweißdraht wird von der Zuführung aus am zweiten Ende der Garnitur in die Garnitur geführt und von da aus zum Schweißdrahtaustritt bewegt, um sodann nach Durchtritt der dort gegebenenfalls angeordneten weiteren Elemente beim Schweißen verwendet und verbraucht zu werden. Für eine gezielte Zuführung des Schweißdrahtes, die manchmal auch ein Zurückziehen des Schweißdrahtes erfordert, können zwischen dem Schweißdrahtaustritt und dem ersten Ende der Garnitur ein Antriebsmittel und/oder ein Vorschubssensor vorgesehen sein.

Die Garnitur einer solchen Schweißdrahtzuführungsvorrichtung kann große Längen annehmen, in komplexeren Schweißanlagen aufwendig verlegt und bei der Bewegung eines Schweißroboters starken Belastungen ausgesetzt sein.

Tritt ein Fehler in der Schweißdrahtzuführungsvorrichtung auf, muss vom Personal die Fehlerquelle ermittelt und das entsprechende Teil ausgetauscht beziehungsweise instandgesetzt werden. Dies ist mitunter mit großem Aufwand verbunden, da die einzelnen Elemente, insbesondere die Garnitur, nur mit großem Aufwand aus der Schweißanlage entnommen und zum Test durch neue Elemente ersetzt werden können. Dies führt zu langen Stillstandszeiten in Produktionsanlagen. Die Fehlersuche gestaltet sich dabei so, dass nach und nach die einzelnen Elemente Garnitur, Antriebsvorrichtung und Vorschubsensor, sofern vorhanden, ausgebaut und durch neue ersetzt werden und dadurch das fehlerhafte Element ermittelt wird. Dies ist mit großem Arbeitsaufwand und dem Vorhalten von Ersatzelementen für jedes Element allein zur Fehlersuche verbunden. Die Ansteuerungsvorrichtung an sich kann dabei nicht überprüft werden, so dass sich manchmal nach Aufwendigem Austauschen aller Elemente herausstellt, dass es an den Elementen nicht gelegen hat.

Aufgabe der vorliegenden Erfindung ist es somit, ein Diagnosegerät und ein Diagnoseverfahren anzugeben, mit dem auf einfache und zeitsparende Weise Fehler in einer Schweißdrahtzuführungsvorrichtung ermittelt und lokalisiert werden können.

Die Aufgabe wird gelöst durch ein Diagnosegerät gemäß Anspruch 1 und ein Diagnoseverfahren gemäß Anspruch 12. Die abhängigen Unteransprüche 2 bis 11 und 13 bis 15 geben vorteilhafte Weiterbildungen an.

Ein erfindungsgemäßes Diagnosegerät weist gemäß Anspruch 1 mindestens ein Ansteuerungsverbindungsmittel auf, über das eine Steuerungseinrichtung des Diagnosegeräts anstelle einer Ansteuervorrichtung mit der Schweißdrahtzuführungsvorrichtung verbindbar ist. Die Steuerungseinrichtung ist dabei zur Ansteuerung der Schweißdrahtzuführungsvorrichtung eingerichtet. Es beinhaltet vorteilhafterweise eine Steuerung, welche eine SPS (speicherprogrammierbare Steuerung) sein kann. Darüber hinaus weist das erfindungsgemäße Diagnosegerät mindestens ein Garniturverbindungsmittel zum Verbinden mit mindestens einer durch die Garnitur geführten elektrischen Leitung am ersten Ende der Garnitur auf. Dabei ist das Diagnosegerät zur Überprüfung der Übertragung durch die Garnitur eingerichtet und ist das erste Ende der Garnitur das Ende, das dem Schweißdrahtaustritt zugewandt ist.

Desweiteren weist das erfindungsgemäße Diagnosegerät mindestens ein Überprüfungsverbindungsmittel zum Verbinden mit einem elektrischen Element, das zwischen dem ersten Ende der Garnitur und den Schweißdrahtaustritt positioniert ist und mit dem Schweißdraht zusammenwirkt, auf. Unter Zusammenwirken ist dabei beispielsweise zu verstehen, dass das elektrische Gerät den Schweißdraht bewegt oder Messungen an ihm vornimmt. Zum bestimmungsgemäßen Betrieb erfordert das elektrische Gerät somit einen Schweißdraht. Darüber hinaus ist das Diagnosegerät zur direkten Ansteuerung des elektrischen Elementes und/oder zur Auswertung von von dem mindesten einen elektrischen Element ausgegebenen Signalen eingerichtet.

Ein solches erfindungsgemäßes Diagnosegerät eignet sich zur Diagnose von Schweißdrahtzuführungsvorrichtungen mit einem Schweißdrahtaustritt und mindestens einem elektrischen Element und mit mindestens einer Garnitur zur Führung des Schweißdrahtes und von elektrischen Leitungen. Dabei ist das elektrische Element zwischen dem Schweißdrahtaustritt und dem ersten Ende der Garnitur angeordnet und das zweite Ende der Garnitur mit der Ansteuervorrichtung verbindbar.

Bei einer solchen Schweißdrahtzuführungsvorrichtung kann es sich bei dem elektrischen Element beispielsweise um ein Antriebselement, beispielsweise einen Motor, oder aber auch um einen Vorschubsensor handeln. Es ist auch nicht notwendig, dass die Garnitur an ihrem zweiten Ende direkt mit der Ansteuervorrichtung verbindbar ist. Vielmehr können dazwischen weitere Elemente, wie beispielsweise ein Antriebselement, vorgesehen sein.

Ein erfindungsgemäßes Diagnosegerät weist somit Mittel auf, um die einzelnen Elemente der Schweißdrahtzuführungsvorrichtung an ihrem Installationsort zu überprüfen. Es ermöglicht aber auch die Überprüfung der Elemente im ausgebauten Zustand, beispielsweise in einer Werkstatt.

Zur Verwendung des Diagnosegerätes müssen die einzelnen Elemente nicht ausgebaut werden. Entweder sind an den Elementen entsprechende Verbindungsmittel, wie beispielsweise seitliche Stecker vorgesehen oder das zu diagnostizierende Element wird zumindest elektrisch von den anderen Elementen insoweit getrennt, als dass die üblichen Verbindungselemente zugänglich sind und somit zum Anschluss an das Diagnosegerät verwendet werden können. In der Praxis reicht es dazu die in der Regel außen zwischen den Elementen beziehungsweise der Garnitur vorgesehenen Verbindungsmittel aufzutrennen. Dann kann mit entsprechendem Verbindungsmitteln auf zwischen den Elementen angeordnete Verbindungsmittel zugegriffen werden. Dies ermöglicht ein einfaches Diagnostizieren der einzelnen Elemente.

Vorteilhafterweise ist im Diagnosegerät eine Ablaufsteuerung, insbesondere eine Software mit entsprechender Menüführung, vorgesehen, die es dem Benutzer ermöglicht die verschiedenen Diagnoseschritte, gesamte Schweißdrahtzuführeinrichtung mit Ansteuerung durch Diagnosegerät und Tests der einzelnen Elemente, wie Garnitur oder Antriebselement, auszuwählen und durchzuführen. Das Diagnosegerät kann vorteilhafterweise eine menügeführte Bedienoberfläche, wie beispielsweise auf einem Touchscreen zur einfachen Bedienung aufweisen.

Mit einem solchen Diagnosegerät ist beispielsweise das Verfahren gemäß Anspruch 12 durchführbar.

Neben der Zeiteinsparung bietet ein solches Diagnosegerät auch den Vorteil, dass nicht eine entsprechende Anzahl von Testelementen vorgehalten werden muss, sondern eine Diagnose auch ohne Ersatz- oder Testelemente möglich ist. Zwar werden Elemente auch zur Reparatur benötigt, doch kann mit dem Diagnosegerät beispielsweise eine Diagnose auch bei fehlenden Elementen durchgeführt werden und die betroffenen Elemente sodann gezielt beschafft werden.

Vorteilhafter Weise beinhaltet das Diagnosegerät gemäß Anspruch 2 einen Motor sowie die für die Regelung des Motors erforderlichen Komponenten. Der Motor ist vorteilhafter Weise innerhalb des Diagnosegerätes angeordnet. Dabei ist das Diagnosegerät so eingerichtet, dass ein von mindestens einer durch die Garnitur geführten Leitung abgegriffenes elektrisches Signal dem Motor zum Betrieb des Motors zugeführt werden kann. Zwar ist es auch ohne einen solchen Motor möglich, eine Übertragung durch die Garnitur zu testen, doch ermöglicht es ein solcher Motor, die Übertragung auch unter entsprechender Belastung und unter möglichst realitätsnahen Umständen durchzuführen. Aus diesem Grunde ist vorteilhafter Weise ein dem im Antriebsmittel vorgesehenen Motor baugleicher Motor und eine der in der Ansteuerungsvorrichtung vorgesehenen Motorregelung baugleiche Motorregelung im Diagnosegerät vorgesehen.

Mit besonderem Vorteil weist der Motor gemäß Anspruch 3 mindestens einen mit dem Diagnosegerät verbundenen Diagnoseanschluss auf und ist das Diagnosegerät zur Überwachung des Betriebes des Motors über den Diagnoseanschluss eingerichtet. Insbesondere wenn der Motor innerhalb des Gehäuses des Diagnosegerätes vorgesehen ist, können zahlreiche Diagnoseanschlüsse direkt innerhalb des Gehäuses des Diagnosegerätes angeordnet und durch das Diagnosegerät ausgewertet werden. Dies ermöglicht eine besonders genaue Analyse, die auch Fehler in der Übertragung durch die Garnitur, die nur bei entsprechender Last auftreten, aufdecken kann.

Auch kann eine Bremse analog zu einem solchen nach einem der Ansprüche 7 bis 9, insbesondere im Diagnosegerät, vorgesehen sein. Unter einer Bremse ist dabei jedes Mittel, dass zur Aufbringung einer Last, gegen die das Antriebsmittel arbeiten muss, geeignet ist, zu verstehen.

Mit Vorteil weist ein erfindungsgemäßes Diagnosegerät gemäß Anspruch 4 Überprüfungsverbindungsmittel zum Verbinden mit einem Vorschubsensor auf. Dabei ist das Diagnosegerät zur Auswertung von von dem Vorschubsensor ausgegebenen Signalen eingerichtet. Der Vorschubsensor wird bei der Diagnose entsprechend angeregt. Dies kann beispielsweise durch Simulieren einer Schweißdrahtbewegung mit einem Finger geschehen oder durch einen entsprechend eingesetzten Simulator erfolgen. Ein solcher Simulator kann dabei beispielsweise aus einem Elektromotor bestehen, der auf den Vorschubsensor aufsetzbar ist. Zu diesem Zweck kann beispielsweise am Vorschubsensor schon eine entsprechend verbundene Welle nach außen geführt sein. In der Praxis weisen die Vorschubsensoren häufig eine Rolle, über die der Schweißdraht geführt wird, auf. Diese Rolle kann beispielsweise manuell gedreht werden.

Mit besonderem Vorteil weist ein erfindungsgemäßes Diagnosegerät gemäß Anspruch 8 ein Überprüfungsverbindungsmittel zum Verbinden mit einem als Antriebsmotor ausgeführten elektrischen Element auf und ist zur direkten Ansteuerung des Antriebsmotors ausgebildet. Bei einer solchen Ausführung kann der Antriebsmotor gezielt und separat getestet werden.

Mit besonderem Vorteil ist beim Test eines Antriebsmotors gemäß Anspruch 7 eine Bremse zum Zusammenwirken mit dem Antriebsmotor vorgesehen. Eine solche Bremse ermöglicht einen Test des Antriebsmotors bei entsprechender Belastung und somit unter möglichst realitätsnahen Umständen. Eine solche Bremse kann auf zahlreiche Arten realisiert werden. So ist es beispielsweise möglich, einen schweißdrahtähnlichen Gegenstand in die Antriebsvorrichtung einzulegen und diese so auszugestalten, dass beim Betätigen des Antriebsmotors eine entsprechende Gegenkraft aufgebracht wird. Dies kann beispielsweise durch einen entsprechenden Schlupf zwischen Bremse und Antriebsvorrichtung oder durch elastische Mittel in der Bremse realisiert werden. Durch eine Bremse lassen sich neben der Elektrik auch die Mechanik eines Motors und gegebenenfalls auch angeschlossener Kraftübertragungsmittel, wie Getriebe, testen.

Auch kann der Antriebsmotor eine nach außen geführte Welle zum Anstellen der Bremse aufweisen.

Mit besonderem Vorteil ist eine solche Bremse gemäß Anspruch 8 elektrisch mit dem Diagnosegerät verbunden. Dabei kann die Bremse mit dem Diagnosegerät sowohl direkt, als auch über mindestens eine Steuerleitung innerhalb der Garnitur und/oder und über mindestens eine Steuerleitung innerhalb einer der Antriebsmotoren verbindbar sein. Dies ermöglicht beispielsweise eine Variation der Last durch das Diagnosegerät. Dies ist beispielsweise durch Verändern der elastischen Elemente der Bremse realisierbar.

Eine solche Verbindung ermöglicht den zeitgleichen Test von Antriebsmotoren unter Lastbedingungen und den Test der entsprechend verwendeten Steuerleitungen auf Leitungsunterbrechung.

Mit besonderem Vorteil ist die Bremse gemäß Anspruch 9 so ausgebildet, dass sie die Drehzahl des Motors messen und diese Messwerte an das Diagnosegerät übertragen kann. Mit einer solchen Bremse ist eine besonders differenzierte Analyse möglich, insbesondere wenn die Bremskraft der Bremse veränderlich ist. Die vom Motor aufgebrachte Kraft kann über die Messung des Motorstroms ermittelt werden.

Mit Vorteil weist das Diagnosegerät gemäß Anspruch 10 ein Überprüfungsverbindungsmittel zum Verbinden mit einem an dem zweiten Ende der Garnitur angeordneten vorgelagerten Antriebsmittel auf. Dabei ist das Diagnosegerät so ausgebildet, dass es das vorgelagerte Antriebsmittel direkt ansteuern kann. Zwar ist der Test durch Auswechseln bei einem solchen vorgelagerten Antriebselement vergleichsweise einfach, da es in der Regel relativ gut zugänglich ist, doch kann durch eine entsprechende Ausbildung des Diagnosegerätes weitere Zeit eingespart werden. Auch ist bei einigen Ausführungen von Schweißdrahtzuführvorrichtungen ein solches vorgelagertes Antriebsmittel aufgrund der zahlreichen durch das Antriebsmittel hindurch geführten Versorgungsmedien, beispielsweise Schutzgaszuführungen, vergleichsweise schwer auszuwechseln.

Mit Vorteil weist das Diagnosegerät zur Überprüfung eines solchen vorgelagerten Antriebsmittels eine Bremse auf, die mit diesem Antriebsmittel zusammenwirken kann. Eine solche Bremse ist vorteilhafter Weise entsprechend der Ansprüche 7 und 9 analog ausgebildet.

Die Aufgabe wird ebenfalls gelöst durch ein Diagnoseverfahren gemäß Anspruch 12 für eine oben geschilderte Schweißdrahtzuführungsvorrichtung. Dabei umfasst das Diagnoseverfahren die vertauschbaren folgenden Schritte, die zumindest bis zum Ermitteln eines Fehlers durchgeführt werden:
- Verbinden der Schweißdrahtzuführvorrichtung mit einer Diagnoseansteuervorrichtung, insbesondere einem Diagnosegerät oder Diagnosesystem nach einem der Ansprüche 1 bis 11, und Testen der Schweißdrahtzuführungsvorrichtung durch einen von der Diagnosesteuerungsvorrichtung angesteuerten Betrieb der Schweißdrahtzuführungsvorrichtung durch die Diagnoseansteuervorrichtung; Dabei werden vorteilhafterweise von der Schweißdrahtzuführeinrichtung erfasste Messwerte und Betriebsparameter, sowie durch die Diagnoseansteuervorrichtung erfassbare Betriebsparameter, wie beispielsweise die Stromaufnahme oder Schweißdrahtgeschwindigkeit, überprüft;
- Verbinden der Schweißdrahtzuführvorrichtung mit der Diagnoseansteuervorrichtung und Abgreifen mindestens eines Signals von mindestens einer der durch die Garnitur geführten elektrischen Leitungen am ersten Ende der Garnitur und Überprüfen der Übertragung des mindestens einen elektrischen Signals durch die Garnitur; vorteilhafterweise werden alle elektrischen Leitungen überprüft;
- Direktes Ansteuern des mindestens einen elektrischen Elements unter Umgehung der Garnitur, insbesondere durch die Diagnoseansteuervorrichtung, und Überprüfen des mindestens einen elektrischen Elements auf fehlerfreien Betrieb; und/oder Abgreifen von von dem mindestens einen elektrischen Element abgegebenen elektrischen Signalen an dem mindestens einen elektrischen Element unter Anregen des mindestens einen elektrischen Elements und Überprüfen der vom mindestens einen elektrischen Element abgegebenen elektrischen Signale.

Dabei kann als Diagnoseansteuervorrichtung beispielsweise ein Diagnosegerät gemäß den Ansprüchen 1 bis 11 verwendet werden. Das Verfahren beinhaltet verschiedene Schritte zum Überprüfen der einzelnen Elemente. Bei direktem Ansteuern eines elektrischen Elements und der Überprüfung des fehlerfreien Betriebes können die von der Schweißdrahtzuführungsvorrichtung erfassten oder von der Diagnoseansteuerungsvorrichtung erfassbaren Messwerte ausgewertet werden. Auch kann durch den Anwender eine entsprechende Kontrolle erfolgen. Das Anregen eines elektrischen Elements kann beispielsweise manuell erfolgen. Auch können entsprechende Hilfsmittel vorgesehen werden. Das Anregen eines Vorschubsensors kann beispielsweise durch Hineinschieben eines Drahtes erfolgen.

Unter Anregen des elektrischen Elements ist zu verstehen, dass das Zusammenwirken mit dem Schweißdraht simuliert wird. Ein Vorschubsensor kann somit beispielsweise durch Hereinschieben beziehungsweise Herausziehen eines Drahtes angeregt werden. Ist er entsprechend zugänglich und weist er Rollen zum Zusammenwirken mit dem Schweißdraht auf, kann er beispielsweise durch manuelles Drehen der Rollen angeregt werden.

Vorteilhafterweise wird bei der Überprüfung der Durchleitung durch die Garnitur ein Motor verwendet, dem das abgegriffene durch die Garnitur durchgeleitete Signal zum Betrieb des Motors zugeführt wird. Dabei wird der Betreib des Motors überwacht. Ein Überwachen kann auch manuell durch den Betreiber des Verfahrens geschehen oder durch entsprechende Sensoren am Motor erfolgen. Hier bietet sich beispielsweise die Überwachung und/oder Analyse der Stromaufnahme und der Motordrehzahl an. Dabei kann es vorteilhaft sein, den Motor zu belasten, um möglichst realistische Testbedingungen zu erzielen.

Vorteilhafter Weise wird bei der Überprüfung eines Antriebsmittels gemäß Anspruch 14 eine Bremse an das Antriebsmittel gekoppelt. Dadurch kann das Antriebsmittel auch unter Last geprüft werden. Dabei ist es besonders vorteilhaft, die auf die Bremse übertragende Kraft zu erfassen und/oder die Bremskraft zu variieren.

Mit besonderem Vorteil wird gemäß Anspruch 15 als elektrisches Element ein Antriebsmotor und/oder ein Vorschubsensor gestestet. Mit besonderem Vorteil werden alle Elemente, insbesondere die Garnitur und alle zwischen dem ersten Ende der Garnitur und dem Schweißdrahtaustritt angeordneten elektrischen Elemente, der Schweißdrahtzuführungsvorrichtung getestet.

Zwar ist prinzipiell die Reihenfolge der durchführbaren Schritte beliebig, doch bietet es sich an, zuerst die Schweißdrahtzuführungsvorrichtung als Ganzes unter Verwendung einer Diagnoseansteuervorrichtung zu testen. Dies hat den Vorteil, dass zunächst allein die Verbindung zwischen der Schweißdrahtzuführungsvorrichtung und der Ansteuervorrichtung getrennt werden muss. Wird dabei schon ein Fehler in der Ansteuerung aufgedeckt, in dem die Schweißdrahtzuführungsvorrichtung bei Betrieb über die Diagnoseansteuerungsvorrichtung fehlerfrei funktioniert, kann die Diagnose beendet werden.

Falls ein Fehler aufgedeckt wird, kann beispielsweise als nächstes die Durchleitung der elektrischen Signale durch die Garnitur geprüft werden.

Anschließend, zumindest falls kein Fehler aufgedeckt wurde, können beispielsweise nacheinander die zwischen erstem Ende der Garnitur und dem Schweißdrahtaustritt angeordneten elektrischen Elemente getestet werden, zumindest bis ein Fehler auftritt.

Im Anschluss, zumindest falls kein Fehler aufgedeckt wurde, können die möglicherweise dem zweiten Ende der Garnitur angeordneten vorgelagerten Antriebsmittel getestet werden.

Die Auswahl der einzelnen Prüfschritte kann beispielsweise durch eine Software mit einer entsprechende Menüführung oder entsprechenden Bedienelementen umgesetzt werden.

Weitere vorteilhafte Ausbildungen der Erfindung werden im Folgenden beispielhaft anhand von schematischen Zeichnungen verdeutlicht. Dabei zeigen die Figuren:
- Fig. 1: eine Ansicht einer herkömmlichen Schweißdrahtzuführungsvorrichtung und der zum Gesamtsystem zugehörigen Steuerung;
- Fig. 2: eine Ansicht einer Schweißdrahtzuführeinrichtung, einer Steuerung und eines Diagnosegerätes beim Test der kompletten Schweißdrahtzuführungsvorrichtung;
- Fig. 3: eine Ansicht einer Schweißdrahtzuführungsvorrichtung und eines Diagnosegerätes bei dem Test der Garnitur;
- Fig. 4: eine Ansicht einer Schweißdrahtzuführungsvorrichtung, einer Steuerung und eines Diagnosegerätes beim Test eines vorgelagerten Antriebsmittels am zweiten Ende der Garnitur;
- Fig. 5: eine Ansicht einer Schweißdrahtzuführeinrichtung, einer Steuerung und eines Diagnosegerätes beim Test eines Antriebsmotors am ersten Ende der Garnitur; und
- Fig. 6: eine Ansicht einer Schweißdrahtzuführeinrichtung, eine Steuerung und eines Diagnosegerätes beim Test eines Vorschubsensors am ersten Ende der Garnitur.

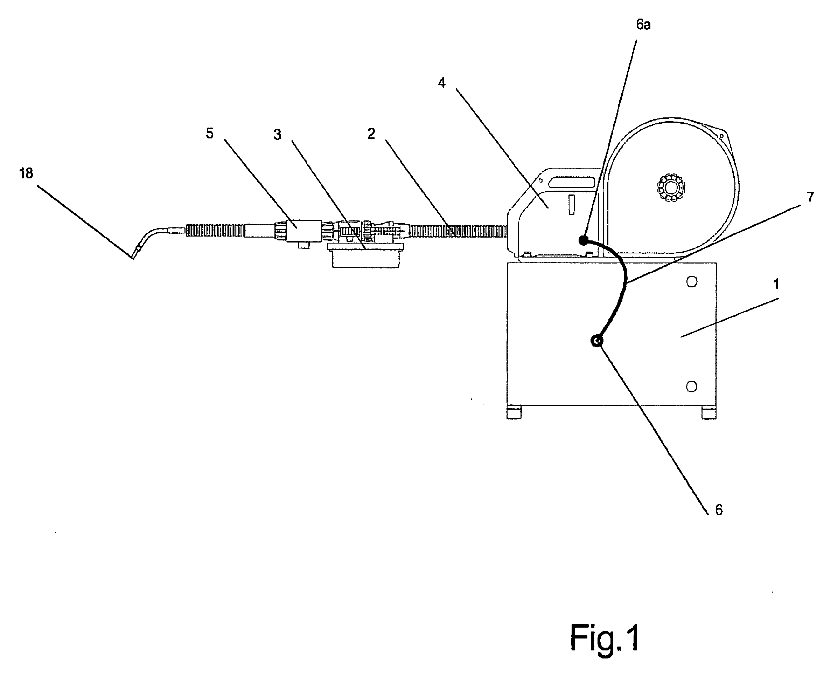

Fig. 1 zeigt eine seitliche Ansicht einer üblichen Schweißdrahtzuführungsvorrichtung und einer Steuerung 1. Zu erkennen sind ein Schweißdrahtaustritt 18, ein Vorschubsensor 5, ein erster Antriebsmotor 3, eine Garnitur 2 und ein vorgelagerter, zweiter Antriebsmotor 4. Die Schweißdrahtzuführeinrichtung weist eine Systemanschlussbuchse 6a auf, über die die Schweißdrahtzuführungsvorrichtung über ein Systemkabel 7 mit einer Systemanschlussbuchse 6b der Steuerung 1 verbunden ist. Der Schweißdraht wird zunächst durch den vorgelagerten, zweiten Antriebsmotor 4 angetrieben, durch die Garnitur 2 geführt und vom ersten Antriebsmotor 3 erneut angetrieben. Sodann wird die Bewegung des Schweißdrahtes durch den Vorschubsensor 5 überwacht. Anschließend tritt der Schweißdraht an dem Schweißdrahtaustritt 18 aus.

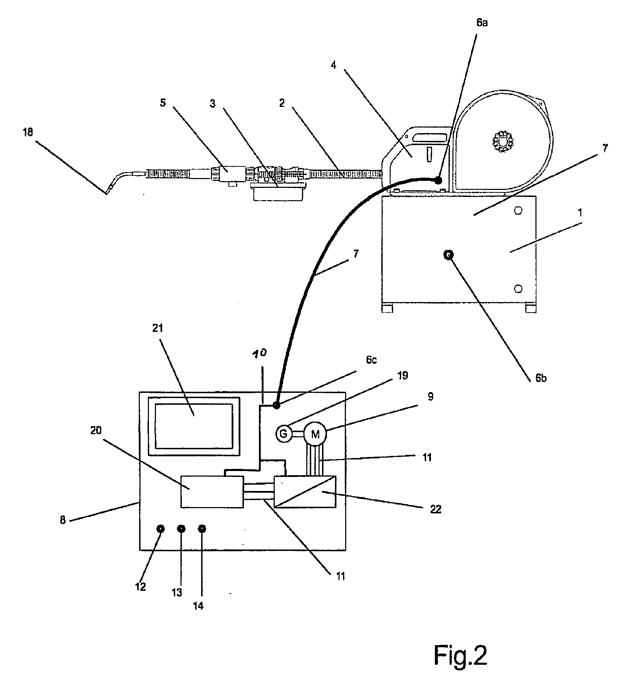

Fig. 2 zeigt eine seitliche Ansicht der Schweißdrahtzuführungsvorrichtung und der Steuerung 1 zusammen mit dem Diagnosegerät 8. Das Diagnosegerät 8 ist über die Systemanschlussbuchse 6c und ein Systemkabel 7 mit der Systemanschlussbuchse 6a der Schweißdrahtzuführungsvorrichtung verbunden. Diese Systemanschlussbuchse 6c ist über interne Leitungen 10 im Diagnosegerät 8 mit einer Ansteuerungseinrichtung verbunden. Diese basiert auf einer programmierbaren Steuereinheit 20 und einer Motorregelung 22. Steuer- und Regeleinheit dienen der Ansteuerung, Weiterleitung und Auswertung von Signalen. Das Diagnosegerät 8 weist einen integrierten Motor 9 mit internen Motoranschluss- und Motordiagnoseleitungen 11 und intern angeschlossenem Sensor 19 auf. Neben der Systemanschlussbuchse 6c weist das Diagnosegerät 8 ein Garniturverbindungsmittel 12, ein Antriebsmittelverbindungsmittel 13, eine Bremsanschlussbuchse 15 und ein Vorschubsensorverbindungsmittel 14 auf. Zusätzlich weist das Diagnosegerät 8 eine grafische Anzeige 21 zum bedienen und beobachten der durchzuführenden Prüfschritte auf.

In der gezeigten Anordnung ist das Diagnosegerät 8 mit der Schweißdrahtzuführvorrichtung so verbunden, dass das Diagnosegerät 8 die Ansteuerung der Schweißdrahtzuführungsvorrichtung übernehmen kann und somit die Schweißdrahtzuführungsvorrichtung als Ganzes testen kann.

Funktioniert die Schweißdrahtzuführvorrichtung in dieser Anordnung trotz vorher bestehenden Fehlers einwandfrei, so ist davon auszugehen, dass die Steuerung 1 und nicht die Schweißdrahtzuführeinrichtung einen Defekt aufweist. Die Diagnose kann dann beendet werden.

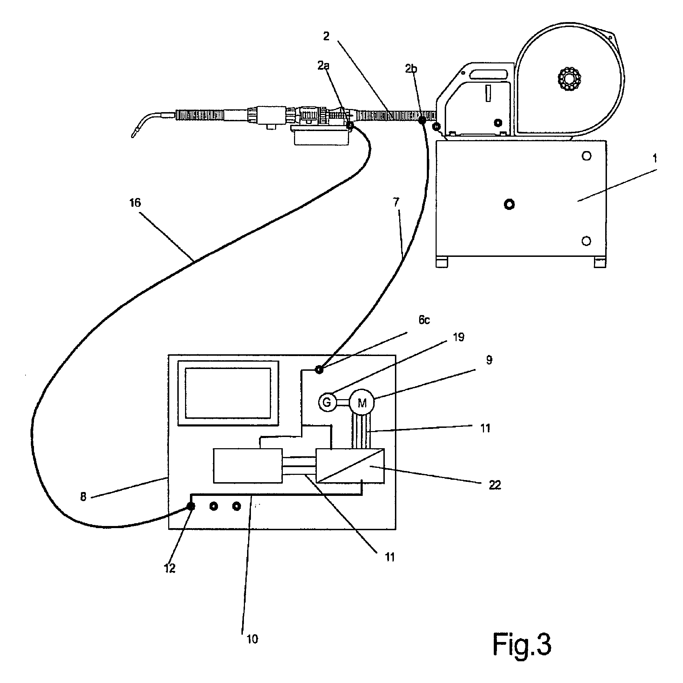

Fig. 3 zeigt eine seitliche Ansicht der Schweißdrahtzuführungsvorrichtung und der Steuerung 1 zusammen mit dem Diagnosegerät 8. In dem hier gezeigten Fall ist das Diagnosegerät 8 über seine Systemanschlussbuchse 6c und dem Systemkabel 7 mit dem zweiten Ende der Garnitur 2b verbunden. Darüber hinaus ist es über das Garniturverbindungsmittel 12 und einem Diagnosekabel 16 mit einem ersten Ende der Garnitur 2a verbunden. In dieser Anordnung kann die Übertragung der Signale durch die Garnitur 2 getestet werden. Darüber hinaus ist innerhalb des Diagnosegerätes 8 die interne Motoranschlussleitung 11 vorgesehen, die den internen Motor 9 über die integrierte Regelung 22 und die interne Leitung 10 mit dem Garniturverbindungsmittel 12 verbindet. Auf diese Weise können die am zweiten Ende der Garnitur 2 abgegriffenen Steuersignale verwendet werden, um den internen Motor 9 anzusteuern. Dessen Betrieb kann über die internen Motordiagnoseleitungen 11 und den verbundenen Sensor 19 überwacht werden. In einem solchen Zustand ist die Übertragung durch die Garnitur 2 auch unter Last, also unter beim Betrieb auftretenden Ströme und Spannungen, prüfbar.

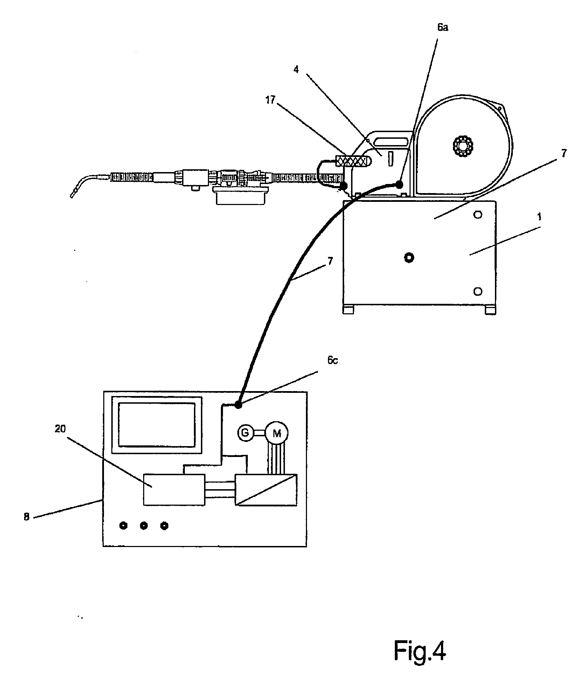

Fig. 4 zeigt eine seitliche Ansicht der Schweißdrahtzuführungsvorrichtung und der Steuerung 1, sowie des Diagnosegerätes 8. Das Diagnosegerät 8 ist über das Systemkabel 7 und die integrierten Leitungen des Antriebsmotors 4 mit einer Bremse 17 verbunden. Alle Anschlüsse der Systemanschlussbuchse 6a, die zum Betrieb des Antriebsmotor 4 notwendig sind, werden dadurch mit dem Diagnosegerät verbunden. Die Bremse 17 ist mechanisch mit dem zweiten, vorgelagerten Antriebsmotor 4 verbunden und belastet diesen. In dieser Verkabelung kann der zweite, vorgelagerte Antriebsmotor 4 auch unter Last überprüft werden.

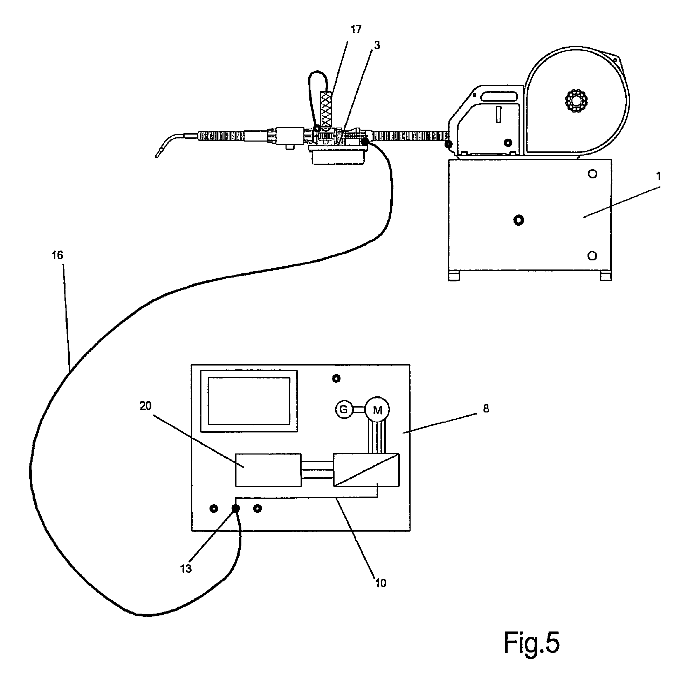

Fig. 5 zeigt eine seitliche Ansicht der Schweißdrahtzuführungsvorrichtung und der Steuerung 1 sowie des Diagnosegeräts 8. Das Diagnosegerät 8 ist über das Antriebsmittelverbindungsmittel 13 und ein Diagnosekabel 16 mit dem ersten Antriebsmotor 3 verbunden. Der Antriebsmotor 3 ist mechanisch und elektrisch mit einer Bremse 17 verbunden, die dem ersten Antriebsmotor 3 belastet. In dieser Anordnung kann die Funktion des ersten Antriebsmotors 3 auch unter Last überprüft werden. Darüber hinaus werden sämtliche Kabelverbindungen, die zum Betrieb des Antriebsmotors 3 notwendig sind getestet.

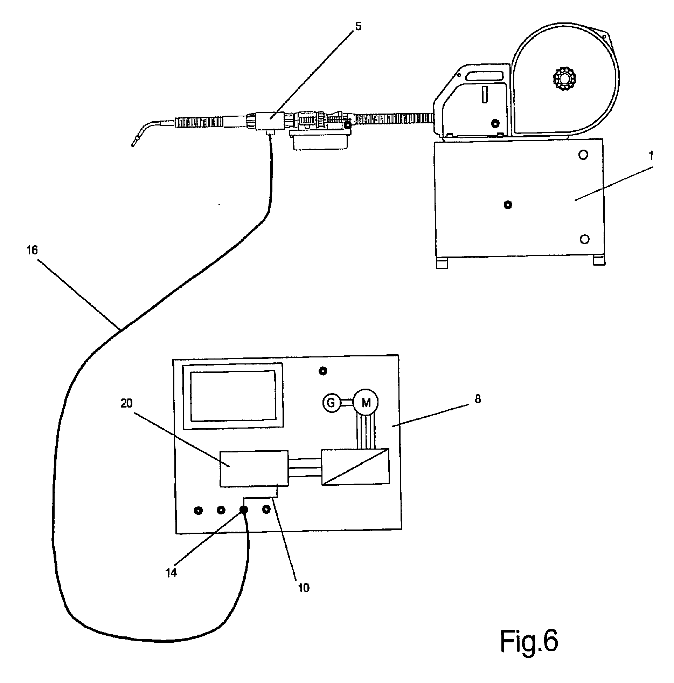

Fig. 6 zeigt eine seitliche Ansicht der Schweißdrahtzuführungsvorrichtung und der Steuerung 1 sowie des Diagnosegerätes 8. Das Diagnosegerät 8 ist über das Vorschubsensorverbindungsmittel 14 und ein Diagnosekabel 16 mit dem Vorschubsensor 5 verbunden. In dieser Anordnung kann die Funktion des Vorschubsensors 5 gestestet werden. Dazu kann beispielsweise der Vorschubsensor 5 durch manuelles Anregen zur Abgabe entsprechender Messsignale gebracht werden. Dazu kann am Vorschubsensor 5 ein entsprechendes Angriffsmittel vorgesehen sein.

Die Messsignale werden von der integrierten Leitung 10 zur Steuerung 20 des Diagnosegerätes 3 weitergeleitet und dort entsprechend ausgewertet.

In den vorstehenden Abbildungen sind die einzelnen Elemente der Schweißdrahtzuführvorrichtung örtlich nicht voneinander getrennt gezeigt. Dies zeigt, dass allein durch Auftrennen der häufig außen gut zugänglich angebrachten elektrischen Verbindungsmittel eine Diagnose möglich ist.

Weiter vorteilhafte Ausführungsformen können vom Fachmann auf den jeweiligen Anmeldungsfall angepasst aufgefunden werden.

### Bezugzeichenliste

- 1: Steuerung
- 2: Garnitur
- 2a: vorderer Garnituranschluss
- 2b: hinterer Garnituranschluss
- 3: Erster Antriebsmotor
- 4: Zweiter Antriebsmotor
- 5: Vorschubsensor
- 6a: Systemanschlussbuchse der Schweißdrahtzuführeinrichtung
- 6b: Systemanschlussbuchse der Steuerung
- 6c: Systemanschlussbuchse des Diagnosegeräts
- 7: Systemanschlusskabel
- 8: Diagnosegerät
- 9: Interner Motor
- 10: Interne Leitungen
- 11: Interne Motoranschluss- und Motordiagnoseleitung
- 12: Garniturverbindungsmittel
- 13: Antriebsmittelverbindungsmittel
- 14: Vorschubsensorverbindungsmittel
- 16: Diagnosekabel
- 17: Bremse
- 18: Schweißdrahtaustritt
- 19: Interner Sensor
- 20: Programmierbare Steuerung
- 21: Anzeige und Bedienelement
- 22: Motorregelung

## Patentansprüche

1. Diagnosegerät (8) für eine Schweißdrahtzuführungsvorrichtung mit einem Schweißdrahtaustritt (18) und mindestens einem elektrischen Element (3, 5) und mit mindestens einer Garnitur (2) zur Führung des Schweißdrahtes und von zumindest elektrischen Leitungen, wobei das elektrische Element (3, 5) zwischen dem Schweißdrahtaustritt (18) und einem ersten Ende (2a) der Garnitur angeordnet ist und mit dem Schweißdraht zusammenwirkt und wobei das zweite Ende (2b) der Garnitur mit einer Ansteuervorrichtung (1) und das mindestens eine elektrische Element mit mindestens einer der elektrischen Leitungen am ersten Ende (2a) der Garnitur (2) verbindbar ist, **dadurch gekennzeichnet, dass** das Diagnosegerät (8)
a. eine Steuerungseinrichtung (20, 22) zur Ansteuerung der Schweißdrahtzuführungsvorrichtung und mindestens ein Ansteuerungsverbindungsmittel (6,7) aufweist, über das die Steuerungseinrichtung (20, 22) anstelle der Ansteuervorrichtung (1) mit der Schweißdrahtzuführungsvorrichtung verbindbar ist; und
b. mindestens ein Garniturverbindungsmittel (12) zum Verbinden mit mindestens einer der elektrischen Leitungen am ersten Ende (2a) der Garnitur (2) aufweist und zur Überprüfung der Übertragung durch die Garnitur (2) eingerichtet ist; und
c. mindestens ein Überprüfungsverbindungsmittel (13, 14) zum Verbinden mit dem mindestens einen elektrischen Element (3, 5) aufweist und zur direkten Ansteuerung des mindestens einen elektrischen Elements (3) und/oder zur Auswertung von von dem mindestens einen elektrischen Element (5) ausgegebenen Signalen eingerichtet ist.

2. Diagnosegerät (8) nach Anspruch 1, **dadurch gekennzeichnet, dass** es einen, insbesondere in einem Gehäuse des Diagnosegerät (8) angeordneten, Motor (9) beinhaltet und so eingerichtet ist, dass mindestens ein über das Garniturverbindungsmittel (12) von mindestens einer der Leitungen abgegriffenes elektrisches Signal dem Motor (9) zu seinem Betrieb zuführbar ist.

3. Diagnosegerät (8) nach einem der vorstehenden Ansprüche, **dadurch gekennzeichnet, dass** der Motor (9) mindestens einen mit dem Diagnosegerät (8) verbundenen Diagnoseanschluss (11) aufweist und das Diagnosegerät (8) zum Überwachen des Betriebs des Motors (9) über den Diagnoseanschluss (11) eingerichtet ist.

4. Diagnosegerät (8) nach einem der vorstehenden Ansprüche, **dadurch gekennzeichnet, dass** ein Überprüfungsverbindungsmittel (13, 14, 15) zum Verbinden mit einem als Vorschubsensor (5) ausgebildeten elektrischen Element vorgesehen ist und das Diagnosegerät (8) zur Auswertung von von dem Vorschubsensor (5) ausgegebenen Signalen eingerichtet ist.

5. Diagnosesystem mit einem Diagnosegerät (8) nach Anspruch 4, **dadurch gekennzeichnet, dass** ein mit dem Diagnosegerät (8) verbindbarer Vorschubsimulator zum Zusammenwirken mit dem Vorschubsensor (5) zur Überprüfung des Vorschubsensors vorgesehen ist.

6. Diagnosegerät (8) nach einem der Ansprüche 1 bis 4 oder Diagnosesystem nach Anspruch 5, **dadurch gekennzeichnet, dass** das Diagnosegerät (8) ein Überprüfungsverbindungsmittel (13, 14) zum Verbinden mit einem als Antriebsmotor (3) ausgeführten elektrischen Element aufweist und zur direkten Ansteuerung des Antriebsmotors (3) ausgebildet ist.

7. Diagnosesystem nach Anspruch 6, **dadurch gekennzeichnet, dass** eine Bremse (17) zum Zusammenwirken mit dem Antriebsmotor vorgesehen ist.

8. Diagnosesystem nach Anspruch 7, **dadurch gekennzeichnet, dass** die Bremse (17) elektrisch mit dem Diagnosegerät verbindbar ist.

9. Diagnosesystem nach Anspruch 8, **dadurch gekennzeichnet, dass** die Bremse (17) zum Messen der Drehzahl des Antriebsmotors (9) und zur Übermittlung der Messwerte an das Diagnosegerät (8) ausgerüstet ist.

10. Diagnosegerät (8) nach einem der Ansprüche1 bis 4 oder 6 oder Diagnosesystem nach einem der Ansprüche 5 oder 7 bis 9, **dadurch gekennzeichnet, dass** ein Überprüfungsverbindungsmittel (13, 14) zum Verbinden mit einem an dem zweiten Ende (2b) der Garnitur (2) angeordneten vorgelagerten Antriebsmittel (4) vorgesehen und dass das Diagnosegerät (8) zur direkten Ansteuerung des vorgelagerten Antriebsmittel (4) eingerichtet ist.

11. Diagnosegerät (8) oder Diagnosesystem nach Anspruch 10, **dadurch gekennzeichnet, dass** eine Bremse (17) für den vorgelagerten Antriebsmotor (4) analog zu einem der Ansprüche 7 bis 9 vorgesehen ist.

12. Diagnoseverfahren für eine Schweißdrahtzuführungsvorrichtung mit einem Schweißdrahtaustritt (18) und mindestens einem elektrischen Element (3, 5) und mit mindestens einer Garnitur (2) zur Führung des Schweißdrahtes und von zumindest elektrischen Leitungen wobei das elektrische Element (3, 5) zwischen dem Schweißdrahtaustritt (18) und einem ersten Ende (2a) der Garnitur (2) angeordnet ist und mit dem Schweißdraht zusammenwirkt, wobei das zweite Ende (2b) der Garnitur (2) mit einer Ansteuervorrichtung (1) und das mindestens eine elektrische Element mit mindestens einer der elektrischen Leitungen am ersten Ende (2a) der Garnitur verbindbar ist, umfassend die Durchführung der vertauschbaren folgenden Schritte zumindest bis zum Ermitteln eines Fehlers:
a. Verbinden der Schweißdrahtzuführvorrichtung mit einer Diagnoseansteuervorrichtung (8), insbesondere einem Diagnosegerät (8) oder Diagnosesystem nach einem der Ansprüche 1 bis 11, und Testen der Schweißdrahtzuführungsvorrichtung durch einen von der Diagnosesteuerungsvorrichtung angesteuerten Betrieb der Schweißdrahtzuführungsvorrichtung durch die Diagnoseansteuervorrichtung (8);
b. Verbinden der Schweißdrahtzuführvorrichtung mit der Diagnoseansteuervorrichtung (8) und Abgreifen mindestens eines Signals von mindestens einer der durch die Garnitur geführten elektrischen Leitungen am ersten Ende (2a) der Garnitur (2) und Überprüfen der Übertragung des mindestens einen elektrischen Signals durch die Garnitur (2);
c. Direktes Ansteuern des mindestens einen elektrischen Elements (3) unter Umgehung der Garnitur (2), insbesondere durch die Diagnoseansteuervorrichtung (8), und Überprüfen des mindestens einen elektrischen Elements (3) auf fehlerfreien Betrieb;
und/oder
Abgreifen von von dem mindestens einen elektrischen Element (5) abgegebenen elektrischen Signalen an dem mindestens einen elektrischen Element (5) unter Anregen des mindestens einen elektrischen Elements (5) und Überprüfen der vom mindestens einen elektrischen Element (5) abgegebenen elektrischen Signale.

13. Diagnoseverfahren nach Anspruch 12, **dadurch gekennzeichnet, dass** bei Schritt b das mindestens eine am ersten Ende der Garnitur (2) abgegriffene Signal einem Motor (9) zum Betrieb des Motors (9) zugeführt wird und der Betrieb des Motors (9) überwacht wird.

14. Diagnoseverfahren nach einem der Ansprüche 12 bis 13, **dadurch gekennzeichnet, dass** bei Schritt c bei der Überprüfung eines als Antriebsmittel (3) ausgebildeten elektrischen Elements ein Lastaufbringungsmittel, insbesondere eine Bremse (17), an das Antriebsmittel (3) gekoppelt wird.

15. Diagnoseverfahren nach einem der Ansprüche 12 bis 14 wobei im Schritt c ein als Antriebsmotor (3) ausgebildetes elektrisches Element direkt angesteuert und auf fehlerfreien Betrieb gestestet wird und/oder ein von einem als Vorschubsensor (5) ausgebildeten elektrischen Element unter Anregen des Vorschubsensors (5) abgegebenes elektrisches Signal abgegriffen und überprüft wird.

## Claims

1. A diagnostic device (8) for a welding wire feeding apparatus having a welding wire outlet (18) and at least one electric element (3, 5) and having at least one trimming (2) for guiding the welding wire and at least electric leads, whereas the electric element (3, 5) is arranged between the welding wire outlet (18) and a first end (2a) of the trimming and co-operates with the welding wire and whereas the second end (2b) of the trimming can be connected to an actuation device (1) and said at least one electric element can be connected to at least one of the electric leads to the first end (2a) of the trimming (2), **characterised in that** the diagnostic device (8)
a. has a control unit (20, 22) for actuating the welding wire feeding apparatus and at least one actuation connecting means (6, 7) via which the control unit (20, 22) instead of the actuation device (1) can be connected to the welding wire feeding apparatus; and
b. has at least one trimming connecting means (12) for connection to at least one of the electric leads on the first end (2a) of the trimming (2) and is designed for controlling the transmission through the trimming (2); and
c. has at least one control connecting means (13, 14) for connection to said at least one electric element (3, 5) and is designed for direct actuation of said at least one electric element (3) and/or for interpreting signals emitted by said at least one electric element (5).

2. A diagnostic device (8) according to claim 1, **characterised in that** it contains a motor (9) arranged in particular in a housing of the diagnostic device (8) and is set up in such a way that least one electric signal tapped from of at least one of the leads via the trimming connecting means (12) can be conveyed to the motor (9) for the operation of the same.

3. A diagnostic device (8) according to one of the previous claims, **characterised in that** the motor (9) has at least one diagnosis connection (11) associated with the diagnostic device (8) and the diagnostic device (8) for controlling the operation of the motor (9) via the diagnosis connection (11).

4. A diagnostic device (8) according to one of the previous claims, **characterised in that** a control connecting means (13, 14, 15) is provided for connection to an electric element designed as a feed sensor (5) and the diagnostic device (8) is designed for interpreting signals emitted by the feed sensor (5).

5. A diagnostic system having a diagnostic device (8) according to claim 4, **characterised in that** a feed simulator which can be connected to the diagnostic device (8) is provided for cooperating with the feed sensor (5) for controlling the feed sensor.

6. A diagnostic device (8) according to any of the claims 1 to 4 or a diagnostic system according to claim 5, **characterised in that** the diagnostic device (8) has a control connecting means (13, 14) for connection to an electric element designed as a drive motor (3) and is formed for direct actuation of the drive motor (3).

7. A diagnostic system according to claim 6, **characterised in that** a brake (17) is provided for cooperation with the drive motor.

8. A diagnostic system according to claim 7, **characterised in that** the brake (17) can be connected electrically to the diagnostic device.

9. A diagnostic system according to claim 8, **characterised in that** the brake (17) is equipped for measuring the rotation speed of the drive motor (9) and for forwarding the measured values to the diagnostic device (8).

10. A diagnostic device (8) according to any of the claims 1 to 4 or 6 or a diagnostic system according to any of the claims 5 or 7 to 9, **characterised in that** a control connecting means (13, 14) is provided for connection to one of the drive means (4) arranged upstream and located on the second end (2b) of the trimming (2) and that the diagnostic device (8) is set up for direct actuation of the drive means (4) arranged upstream.

11. A diagnostic device (8) or a diagnostic system according to claim 10, **characterised in that** a brake (17) is provided for the drive motor (4) arranged upstream and analogically to one of the claims 7 to 9.

12. A diagnosis method for a welding wire feeding apparatus having a welding wire outlet (18) and at least one electric element (3, 5) and having at least one trimming (2) for guiding the welding wire and at least electric leads, whereas the electric element (3, 5) is arranged between the welding wire outlet (18) and a first end (2a) of the trimming (2) and co-operates with the welding wire, whereas the second end (2b) of the trimming (2) can be connected to an actuation device (1) and said at least one electric element can be connected to of at least one of the electric leads to the first end (2a) of the trimming, comprising the realisation of the interchangeable following steps at least until an error has been identified:
a. Connection of the welding wire feeding device having a diagnostic actuation apparatus (8), in particular a diagnostic device (8) or a diagnostic system according to any of the claims 1 to 11, and testing the welding wire feeding apparatus through the operation of the welding wire feeding apparatus, actuated by the diagnostic control apparatus and conducted by the diagnostic actuation apparatus (8);
b. Connection of the welding wire feeding device to the diagnostic actuation apparatus (8) and tapping of at least one signal from at least one of the electric leads guided through the trimming on the first end (2a) of the trimming (2) and control of the transmission of said at least one electric signal through the trimming (2);
c. Direct actuation of said at least one electric element (3) by bypassing the trimming (2), in particular through the diagnostic actuation apparatus (8), and controlling said at least one electric element (3) for correct operation;
and/or
tapping electric signals emitted from said at least one electric element (5) on said at least one electric element (5) by exciting said at least one electric element (5) and controlling the electric signals emitted by said at least one electric element (5).

13. A diagnosis method according to claim 12, **characterised in that** in phase b said at least one signal tapped on the first end of the trimming (2) is conveyed to the motor (9) for operating the motor and the operation of the motor (9) is monitored.

14. The diagnostic method according to one of the claims 12 to 13, **characterised in that** in phase c when controlling an electric element designed as a drive means (3), a load application means, in particular a brake (17) is coupled to the drive means (3).

15. The diagnostic method according to one of the claims 12 to 14, whereas in step c an electric element designed as a drive motor (3) is directly actuated and tested for correct operation and/or an electric signal emitted by an electric element designed as a feed sensor (5) is tapped and controlled by exciting the feed sensor (5).

## Revendications

1. Appareil de diagnostic (8) pour un dispositif de guidage de fil à souder possédant une sortie de fil de soudure (18) et au moins un élément électrique (3, 5) et au moins une garniture (2) pour guider le fil à souder et au moins des conduits électriques, où l'élément électrique (3, 5) est disposé entre la sortie de fil de soudure (18) et une première extrémité (2a) de la garniture et coopère avec le fil à souder et où la seconde extrémité (2b) de la garniture peut être connectée à un dispositif d'actionnement (1) et ledit au moins un élément électrique peut être connecté à l'aide d'au moins l'un des câbles électriques à une première extrémité (2a) de la garniture (2), **caractérisé en ce que** l'appareil de diagnostic (8)
a. présente un système de commande (20, 22) pour actionner le dispositif de guidage de fil à souder et au moins un moyen de liaison de commande (6, 7), par l'intermédiaire duquel le système de commande (20, 22) peut être connecté au fil à souder à la place du dispositif d'actionnement (1), et
b. présente au moins un moyen de liaison de garniture (12) permettant un raccordement avec au moins l'un des câbles électriques au niveau de la première extrémité (2a) de la garniture (2) et est configuré pour contrôler la transmission à travers la garniture (2) et
c. présente au moins un moyen de liaison de contrôle (13, 14) permettant un raccordement avec ledit au moins un élément électrique (3, 5) et est configuré pour assurer la commande directe dudit au moins un élément électrique (3) et/ou pour interpréter des sigaux produits par ledit au moins un élément électrique (5).

2. Appareil de diagnostic (8) selon la revendication 1, **caractérisé en ce qu'**il contient un moteur, en particulier disposé dans un carter de l'appareil de diagnostic (8) et qu'il est configuré de telle sorte qu'au moins un signal électrique capté par au moins l'un des câbles par l'intermédiaire de la liaison de garniture (12) peut être acheminé au moteur (9) pour en assurer l'exploitation.

3. Appareil de diagnostic (8) selon l'une des revendications précédentes, **caractérisé en ce que** le moteur (9) présente au moins un raccordement de diagnostic (11) relié à l'appareil de diagnostic (8) et que l'appareil de diagnostic (8) est configuré pour surveiller le fonctionnement du moteur (9) par le biais du raccordement de diagnostic (11).

4. Appareil de diagnostic (8) selon l'une des revendications précédentes, **caractérisé en ce qu'**un moyen de liaison de contrôle (13, 14, 15) est prévu pour se raccorder à un élément électrique conçu comme capteur d'avance (5) et l'appareil de diagnostic (8) est configuré pour interpréter des signaux transmis par le capteur d'avance (5).

5. Système de diagnostic possédant un appareil de diagnostic (8) selon la revendication 4, **caractérisé en ce qu'**un simulateur d'avance pouvant se connecter à l'appareil de diagnostic (8) pour coopérer avec le capteur d'avance (5) pour contrôler le capteur d'avance.

6. Appareil de diagnostic (8) selon l'une des revendications 1 à 4 ou système de diagnostic selon la revendication 5, **caractérisé en ce que** l'appareil de diagnostic (8) présente un moyen de liaison de contrôle (13, 14) pour se raccorder à un élément électrique conçu comme moteur d'entraînement (3) et est conçu pour assurer la commande directe du moteur d'entraînement (3).

7. Système de diagnostic selon la revendication 6, **caractérisé en ce qu'**un frein (17) est prévu pour coopérer avec le moteur d'entraînement.

8. Système de diagnostic selon la revendication 7, **caractérisé en ce que** le frein (17) peut se connecter électriquement à l'appareil de diagnostic.

9. Système de diagnostic selon la revendication 8, **caractérisé en ce que** le frein (17) est équipé pour mesurer la vitesse de rotation du moteur d'entraînement (9) et pour transmettre les valeurs de mesure à l'appareil de diagnostic (8).

10. Appareil de diagnostic (8) selon l'une des revendications 1 à 4 ou 6 ou système de diagnostic selon l'une des revendications 5 ou 7 à 9, **caractérisé en ce qu'**un moyen de liaison de contrôle (13, 14) est prévu pour se raccorder à un moteur d'entraînement (4) monté en amont get disposé au niveau de la seconde extrémité (2b) de la garniture (2) et **en ce que** l'appareil de diagnostic (8) est configuré pour assurer la commande directe du moyen d'entraînement (4) monté en amont.

11. Appareil de diagnostic (8) ou système de diagnostic selon la revendication 10, **caractérisé en ce qu'**un frein (17) est prévu pour le moteur d'entraînement (4) monté en amont, de façon analogue à l'une des revendications 7 à 9.

12. Procédé de diagnostic pour un dispositif de guidage de fil à souder possédant une sortie de fil de soudure (18) et au moins un élément électrique (3, 5) et pourvu au moins d'une garniture (2) pour guider le fil à souder et au moins des câbles électriques, où l'élément électrique (3, 5) est disposé entre la sortie de fil de soudure (18) et une première extrémité (2a) de la garniture et coopère avec le fil à souder, et où la seconde extrémité (2b) de la garniture (2) peut être connectée à un dispositif de commande et ledit au moins un élément électrique peut être connecté à l'aide d'au moins l'un des câbles électriques à une première extrémité (2a) de la garniture, comprenant la réalisation des phases suivantes interchangeables au moins jusqu'à l'identification d'une erreur:
a. Liaison du fil à souder à un diagnostic de commande de diagnostic (8), en particulier un appareil de diagnostic (8) ou système de diagnostic selon l'une des revendications 1 à 11, et test du dispositif de guidage de fil à souder par le fonctionnement du dispositif de guidage de fil à souder, commandé par le diagnostic de commande de diagnostic et réalisé par le diagnostic de commande de diagnostic (8);
b. Liaison du dispositif de guidage de fil à souder avec le dispositif de commande de diagnostic (8) et capture d'au moins un signal provenant d'au moins un des câbles électriques guidés à travers la garniture au niveau de la première extrémité (2a) de la garniture (2) et contrôle de la transmission dudit au moins un signal électrique à travers la garniture (2);
c. Commande directe dudit au moins un élément électrique (3) en contournant la garniture (2), en particulier à travers le diagnostic de commande de diagnostic (8), et contrôle dudit au moins un élément électrique (3) pour vérifier le parfait fonctionnement;
et/ou
capture de signaux électriques émis par ledit au moins un élément électrique (5) au niveau dudit au moins un élément électrique (5) par excitation dudit au moins un élément électrique (5) et contrôle des signaux électriques émis par ledit au moins élément électrique (5).

13. Procédé de diagnostic selon la revendication 12, **caractérisé en ce que** dans la phase b ledit au moins un signal capté au niveau de la première extrémité de la garniture (2) est acheminé à un moteur (9) pour assurer le fonctionnement du moteur (9) et le fonctionnement du moteur (9) fait l'objet d'une surveillance.

14. Procédé de diagnostic selon l'une quelconque des revendications 12 à 13, **caractérisé en ce que** dans la phase c lors du contrôle d'un élément électrique conçu comme moteur d'entraînement (3), un moyen d'application de contrainte, en particulier un frein (17), est couplé au moyen d'entraînement.

15. Procédé de diagnostic selon l'une quelconque des revendications 12 à 14, où dans la phase c un élément électrique conçu comme moteur d'entraînement (3) est asservi directement et fait l'object d'un contrôle de bon fonctionnement et/ou un signal électrique émis par un élément électrique conçu comme capteur d'avance (5) est capturé et contrôlé par excitation du capteur d'avance (5).
